# EUROPEAN PATENT SPECIFICATION

(11) **EP 0 489 295 B1**
(45) Date of publication and mention of the grant of the patent: **10.06.1998**
(21) Application number: 91119668.1
(22) Date of filing: 18.11.1991
(51) Int. Cl.: G01N 21/88, G02F 1/13, G01R 31/308

(54) **Liquid crystal panel inspection method**
Verfahren zur Inspektion einer Flüssigkristalltafel
Procédé pour inspecter un panneau à cristal liquide

(30) Priority: 04.12.1990 JP 404006/90
(43) Date of publication of application: 10.06.1992
(73) Proprietor: YOZAN INC., Tokyo 155 (JP); SHARP KABUSHIKI KAISHA, Osaka-shi, Osaka-fu 545 (JP)
(72) Inventor: Kumagai, Ryohei, c/o Ezel Inc., Bunkyo-ku, Tokyo 112 (JP); Hiiro, Kaoru, c/o Ezel Inc., Bunkyo-ku, Tokyo 112 (JP); Shimizu, Harumi, c/o Ezel Inc., Bunkyo-ku, Tokyo 112 (JP); Oosaka, Manabu, c/o Ezel Inc., Bunkyo-ku, Tokyo 112 (JP); Takahashi, Tooru, c/o Ezel Inc., Bunkyo-ku, Tokyo 112 (JP)
(74) Representative: Grünecker, Kinkeldey, Stockmair & Schwanhäusser Anwaltssozietät

(56) References cited:
- EP-A- 0 348 703
- US-A- 4 513 441
- IBM JOURNAL OF RESEARCH AND DEVELOPMENT. vol. 29, no. 1, January 1985, NEW YORK US pages 73 - 86,J.R.MANDEVILLE:'novel method for analysis of printed circuit images'
- IEEE TRANSACTIONS ON PATTERN ANALYSIS AND MACHINE INTELLIGENCE vol. 10, no. 1, January 1988, New York, US, pages 56-58; A.M. DARWISH et al.: 'A rule based approach for visual pattern inspection'
- IEEE TRANSACTIONS ON PATTERN ANALYSIS AND MACHINE INTELLIGENCE vol. 4, no. 6, November 1982, NEW YORK US pages 557 - 573;R.T.CHIN:'Automated Visual Inspection: A Survey'

## Description

### FIELD OF THE INVENTION

The present invention relates to an inspection method for a liquid crystal panel used for a display device of a computer or the like.

### BACKGROUND OF THE INVENTION

When liquid crystal panels are manufactured, several percent of defective products occurs. Conventionally, the defective products are found out by eye-inspection. First, observing the luminousness of the surface of a panel energized, the defective parts are roughly found out. Next, observing each part of a defective liquid crystal panel in detail, it is inspected where the defective parts are and how the parts are defective.

Such eye-inspection is, however, very difficult. It takes several hours to inspect one liquid crystal panel, even for one skilled in the inspection.

Document JP-A-1 191 048 discloses an inspection method for a liquid crystal plate wherein a section to be inspected is compared with a master element. The result of the inspection is obtained by a shape matching between the inspected section and the master element.

The inspection method for automatic inspection of an IC may be applicable to inspection of liquid crystal. This method is one of a pattern matching method, in such an IC image is compared with a blueprint. Since the parts on the liquid crystal has a thickness and is rather three-dimensional, the edge of the parts appears as shadowy lines, differently from the flat surface of an IC. The input apparatus for the image of a liquid crystal is adjusted not to take the shadowy lines, however a part of the lines may be inputted due to optical aberration and light condition. In such an image, it is impossible to find out defective parts without fail by comparing the parts with a template.

### SUMMARY OF THE INVENTION

The object of the present invention is to provide a liquid crystal panel inspection method, by which it is possible for the unskilled person inspect in a short time.

This object is achieved by a method comprising the steps set out in claim 1. Advantageous embodiments are defined in claims 2-7.

### BRIEF DESCRIPTION OF THE DRAWINGS

Fig. 1 shows the method for the judgment of whether a liquid crystal panel to be inspected is defectless or not.

Fig. 2 shows the pattern with the allowable range.

Fig. 3 shows a perspective view of an apparatus used for the inspection method of this invention.

### PREFERRED EMBODIMENT OF THE PRESENT INVENTION

Hereinafter, the present invention is described referring to the attached drawings.

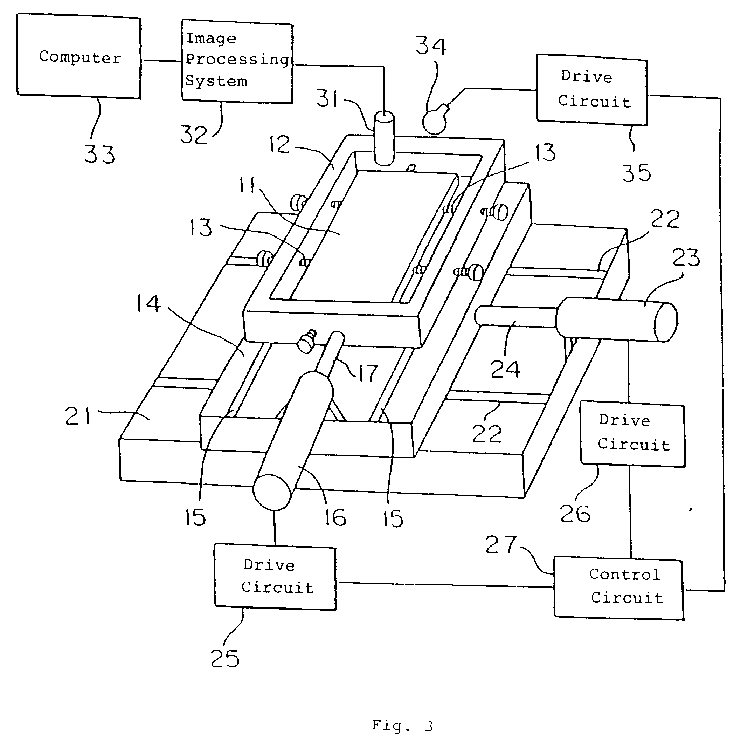

Fig. 3 shows an apparatus used for the present invention. A liquid crystal panel 11 is located inside of a support frame 12 and fixed on the frame 12 with bolts 13. Support frame 12 is movably mounted on a pair of rails 15 located on a movable plate 14. A cylinder device 16 is fixed on the end of the movable plate 14, whose piston rod 17 is connected with the support frame 12. Movable plate 14 is movably mounted on a pair of rails 22 located on fixed plate 21. Similar to the movable plate 14, the fixed plate 21 is provided with a cylinder device 23 at one end whose piston rod 24 is connected with the movable plate 14.

Support frame 12 is moved parallel to the movable plate 14 by controlling the cylinder device 16, and the movable plate 14 moves parallel to the fixed plate 21 by controlling the cylinder device 23. Cylinder devices 16 and 23 are driven by drive circuits 25 and 26, respectively, so as to move the piston rods 17 and 24 forward or backward. Drive circuits 25 and 26 are controlled by a control circuit 27.

A microscope 31 is supported by a fixed frame (not shown) above the liquid crystal panel 11. Each pattern is inputted through the microscope 31, as described later. The image of this pattern is inputted to image processing system 32 and various processings are performed therein. Image processing system 32 is controlled by computer 33.

A light source 34, such as a stroboscope, is provided for light-ing the support frame 12 from above. It is fixed to and movable with the support frame 12. The light source 34 is driven by a drive circuit 35 which is controlled by control circuit 27.

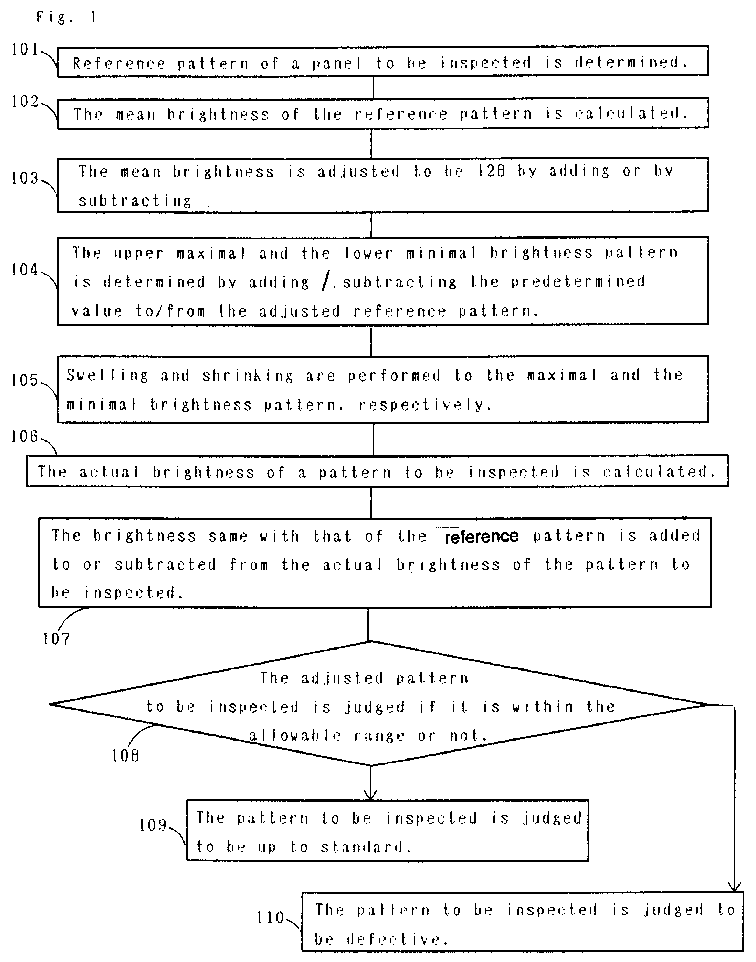

Firstly, Fig. 1 will be described here. Fig. 1 shows the process to judge whether a liquid crystal panel is defective or not by comparing a pattern to be inspected with a reference pattern.

On step 101, the reference pattern of the panel to be inspected is determined. A liquid crystal panel can be divided into single parts, each of which is a constituent, isolable, and an inspectable area. The term "pattern" as used here means the single part as a unit area of image of the liquid crystal panel. Numerous cells constitute a liquid crystal panel, wherein a definite number of cells form the unit area. The reference pattern is determined by selecting a pattern which belongs to the group with the maximal number of similar characteristics, among a plurality of patterns extracted at random.

On step 102, the reference pattern is inputted by a microscope and so forth and the mean brightness is calculated. On step 103, the mean brightness is adjusted to 128 by adding to or subtracting from the brightness of each pixel even if the actual mean brightness is, for example, 100 or 150, which makes it possible to inspect the brightness of a pattern to be inspected with the upper limit and the lower limit range. The value of 128 is the middle value of brightnesses shown with 256 levels.

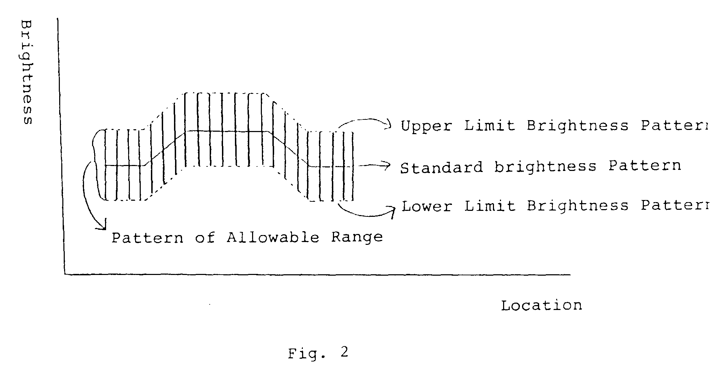

On step 104, the predetermined value is added to subtracted from the adjusted reference brightness pattern in order to determine the range of brightness. The patterns obtained are determined to be the upper limit brightness pattern and the lower limit brightness pattern, respectively, and a pattern between them is called the pattern within the allowable range (Fig. 2). When the pattern to be inspected is within the allowable range, the liquid crystal panel to be inspected is judged to be up to standard, that is, to be defectless.

However, the accurate brightness of a pattern to be inspected cannot be calculated if the location of it is not exact to input it by the microscope or the like. In such a case, the pattern to be inspected can be judged to be defective even when it is within the allowable range, and vice versa, it can be judged to be up to standard when it is outside the allowable range. In order to prevent this swelling is performed to the upper limit brightness pattern on step 105. Here, swelling is the processing step to give the maximal brightness in a 3x3 convolution to the center pixel. This processing step absorbs the difference of one pixel above, below, right-hand neighbor and left-hand neighbor of the centre pixel of the pattern. In the same way, shrinking is performed to the pattern on the lower limit brightness. On shrinking, a 3x3 convolution can absorb the difference of one pixel in the same way as swelling. By performing such a processing, it is possible to avoid the error of calculation of the brightness caused by the difference of the location upon inputting a pattern to be inspected.

On step 106, after inputting a pattern to be inspected by a micro-scope or the like, the brightness of it is calculated. On step 107, the value same as for the reference pattern is added to or subtracted from each pixel of the pattern to be inspected.

On step 108, the pattern to be inspected which is adjusted on step 107 is measured to see if it is within the allowable range or not. When it is within the allowable range, it is judged to be up to standard on step 109. On the other hand, when it exceeds the upper limit value or is below the lower limit value, the pattern to be inspected is judged to be defective.

As mentioned above, with the present invention it is possible for the unskilled person to inspect the total surface of a liquid crystal panel accurately within a short time.

## Claims

1. An inspection method for inspecting a liquid crystal panel which can be divided into single parts which are constituent, isolable and inspectable areas, said single part being defined to be a unit area of image one of which is defined as a pattern to be inspected, for judging whether it is defective or not by comparing said pattern to be inspected with a reference pattern recorded beforehand comprising the steps of:
i) Selecting a unit area of image having no defect from the liquid crystal panel as a reference pattern before the inspection of the pattern to be inspected;
ii) Calculating the mean brightness value of the reference pattern;
iii) Adjusting the mean brightness value of said reference pattern to the mid-point of the brightness range by adding or subtracting a suitable brightness value to or from the brightness value of each pixel of the reference pattern to obtain an adjusted reference pattern;
iv) Generating an upper limit reference pattern and a lower limit reference pattern by adding said suitable value and by subtracting said suitable value respectively, to/from the brightness value of each pixel of said adjusted reference pattern;
v) Comparing the brightness value of each pixel of the upper limit and the lower limit reference pattern with the brightness value of a corresponding pixel of the pattern to be inspected;
vi) Judging said liquid crystal panel to be inspected to be up to the standard when the brightness value of more than a predetermined number of pixels is within the range between the brightness values of said upper limit and said lower limit reference patterns.

2. An inspection method as claimed in claim 1, wherein said unit area of image comprises a definite number of cells.

3. An inspection method as claimed in claim 1, wherein said liquid crystal panel comprises a group of patterns with similar characteristics.

4. An inspecting method as claimed in claim 1, wherein said adjusted mean brightness value is adjusted to be 128.

5. An inspection method as claimed in claim 1, wherein swelling is performed for said upper limit brightness pattern.

6. An inspection method as claimed in claim 1, wherein shrinking is performed for said lower limit brightness pattern.

7. An inspection method as claimed in claim 1, wherein said suitable value same as for said reference pattern is added to or subtracted from each pixel of the pattern to be inspected.

## Patentansprüche

1. Ein Inspektionsverfahren zur Inspektion einer Flüssigkristalltafel, die in einzelne Teile unterteilbar ist, die isolierbare und inspizierbare Bestandteilsgebiete sind, wobei ein einzelner Teile als ein "Einheitsgebiet eines Bildes" definiert ist, von denen eines als ein zu inspizierendes Muster definiert ist, zur Beurteilung, ob es defekt ist oder nicht durch Vergleichen des zu inspizierenden Musters mit einem Referenzmuster, das im Vorhinein aufgezeichnet wurde, mit den folgenden Schritten:
i) Auswählen eines Einheitsgebietes des Bilds ohne Defekt von der Flüssigkristalltafel als ein Referenzmuster vor der Inspektion des zu inspizierenden Musters;
ii) Berechnen des mittleren Helligkeitswerts des Referenzmusters;
iii) Anpassen des mittleren Helligkeitswerts des Referenzmusters an den Mittelpunkt des Helligkeitsbereichs durch Addieren oder Subtrahieren eines geeigneten Helligkeitswerts zu oder von dem Helligkeitswert jedes Pixels des Referenzmusters zum Erhalt eines angepaßten Referenzmusters;
iv) Erzeugen eines Obergrenzenreferenzmusters und eines Untergrenzenreferenzmusters durch Hinzufügen des geeigneten Werts und durch Abziehen des geeigneten Werts jeweils zu und von dem Helligkeitswerts jedes Pixels des angepaßten Referenzmusters;
v) Vergleichen des Helligkeitswerts jedes Pixels des Obergrenzenreferenzmusters und des Untergrenzenreferenzmusters mit dem Helligkeitswerts eines entsprechenden Pixels des zu inspizierenden Musters;
vi) Feststellen, daß die zu inspizierende Flüssigkristalltafel die Norm erreicht, wenn der Helligkeitswert von mehr als einer vorbestimmten Anzahl von Pixeln innerhalb des Bereichs zwischen den Helligkeitswerten des Obergrenzenreferenzmusters und des Untergrenzenreferenzmusters ist.

2. Ein Inspektionsverfahren wie in Anspruch 1 beansprucht, wobei das Einheitsgebiet des Bildes eine bestimmte Anzahl von Zellen umfaßt.

3. Ein Inspektionsverfahren wie in Anspruch 1 beansprucht, wobei die Flüssigkristalltafel eine Gruppe von Mustem mit ähnlichen Charakteristiken umfaßt.

4. Ein Inspektionsverfahren wie in Anspruch 1 beansprucht, wobei der angepaßte mittlere Helligkeitswert so eingestellt ist, daß er 128 ist.

5. Ein Inspektionsverfahren wie in Anspruch 1 beansprucht, wobei ein Anschwellen für das Helligkeitsmuster des oberen Grenzwerts durchgeführt wird.

6. Ein Inspektionsverfahren wie in Anspruch 1 beansprucht, wobei ein Schrumpfen für das Helligkeitsmuster des unteren Grenzwerts durchgeführt wird.

7. Ein Inspektionsverfahren wie in Anspruch 1 beansprucht, wobei der geeignete Wert genauso wie für das Referenzmuster zu jedem Pixel des zu inspizierenden Musters addiert oder davon subtrahiert wird.

## Revendications

1. Procédé d'inspection pour inspecter un panneau à cristal liquide que l'on peut diviser en parties simples qui sont des surfaces constitutives, isolables et inspectables, ladite partie simple étant définie afin de constituer une "surface unitaire d'image", dont une est définie comme motif à inspecter, afin d'estimer s'il est défectueux ou non en comparant ledit motif à inspecter à un motif de référence enregistré au préalable comprenant les étapes consistant:
i) à choisir une surface unitaire d'image n'ayant aucun défaut provenant du panneau à cristal liquide en tant que motif de référence avant l'inspection du motif à inspecter;
ii) à calculer la valeur moyenne de la luminosité du motif de référence;
iii) à ajuster la valeur moyenne de la luminosité dudit motif de référence au milieu de la gamme de luminosité en ajoutant à la valeur de luminosité de chaque pixel du motif de référence ou en soustrayant de celle-ci une valeur de luminosité appropriée pour obtenir un motif de référence ajusté;
iv) à créer un motif de référence de limite supérieure et un motif de référence de limite inférieure respectivement en ajoutant ladite valeur appropriée à, et en soustrayant ladite valeur appropriée de la valeur de luminosité de chaque pixel dudit motif de référence ajusté ;
v) à comparer la valeur de luminosité de chaque pixel du motif de référence de limite supérieure et de celui de limite inférieure à la valeur de luminosité d'un pixel correspondant du motif à inspecter;
vi) à estimer que ledit panneau à cristal liquide à inspecter est à la norme lorsque la valeur de luminosité de plus d'un nombre prédéterminé de pixels est dans la gamme entre les valeurs de luminosité desdits motifs de référence de limite supérieure et de limite inférieure.

2. Procédé d'inspection selon la revendication 1, dans lequel ladite surface unitaire d'image comprend un nombre défini de cellules.

3. Procédé d'inspection selon la revendication 1, dans lequel ledit panneau à cristal liquide comprend un groupe de motifs avec des caractéristiques similaires.

4. Procédé d'inspection selon la revendication 1, dans lequel ladite valeur moyenne ajustée de la luminosité est ajustée pour valoir 128.

5. Procédé d'inspection selon la revendication 1, dans lequel un gonflement est réalisé pour ledit motif de luminosité de limite supérieure.

6. Procédé d'inspection selon la revendication 1, dans lequel un rétrécissement est réalisé pour ledit motif de luminosité de limite inférieure.

7. Procédé d'inspection selon la revendication 1, dans lequel ladite valeur appropriée identique à celle pour ledit motif de référence est ajoutée à chaque pixel du motif à inspecter ou soustraite de celui-ci.
